# EUROPÄISCHE PATENTSCHRIFT

(11) **EP 3 293 912 B1**
(45) Veröffentlichungstag und Bekanntmachung des Hinweises auf die Patenterteilung: **25.03.2020**
(21) Anmeldenummer: 16188340.0
(22) Anmeldetag: 12.09.2016
(51) Int. Cl.: H04L 9/32

(54) **TEILNEHMERIDENTIFIKATIONSSYSTEM**
SUBSCRIBER IDENTIFICATION SYSTEM
SYSTEME D'IDENTIFICATION DE PARTICIPANTS

(43) Veröffentlichungstag der Anmeldung: 14.03.2018
(73) Patentinhaber: Deutsche Telekom AG, 53113 Bonn (DE)
(72) Erfinder: KALINER, Stefan, 53639 Königswinter (DE)
(74) Vertreter: Raible Deissler Lehmann Patentanwälte PartG mbB

(56) Entgegenhaltungen:
- DE-A1- 19 527 715
- DE-A1-102008 024 798
- DE-A1-102013 105 727
- DE-A1-102014 105 866

## Beschreibung

### TECHNISCHES GEBIET

Die vorliegende Erfindung betrifft das Gebiet der Kommunikationstechnik, insbesondere der Identifizierung eines Teilnehmers in einem Kommunikationsnetzwerk.

### TECHNISCHER HINTERGRUND

Für bestimmte Anwendungen, beispielsweise im Kontext des mobilen Internets der Dinge (mobile Internet-of-Things, mobile IoT), ist ein Einsatz klassischer SIM-Karten (Subscriber Identity Module, SIM) mit Herausforderungen verbunden, da klassische SIM-Karten limitierende Rahmenbedingungen beispielsweise bezüglich der Kosten, der Baugröße und des Energieverbrauchs aufweisen können.

Der Einsatz klassischer SIM-Karten ist zudem wegen ihrer anspruchsvollen Herstellung, hoher Sicherheitsvoraussetzungen und des physikalischen Handhabungsaufwands in der Logistik im Verhältnis zur bereitgestellten Grundfunktionalität relativ teuer. Dies gilt insbesondere dann, wenn der Gesamtpreis eines Kommunikationsgerätes sehr niedrig ist, wie es für zukünftige Kommunikationsgeräte im Kontext des mobilen Internets der Dinge vorgesehen ist. Derartige Kommunikationsgeräte umfassen beispielsweise Sensoren und Aktoren mit Mobilfunkschnittstellen sowie einfachen Datenübertragungsmodulen.

Zudem verfügen derartige Kommunikationsgeräte typischerweise nicht über den erforderlichen Platz zur Integration von klassischen SIM-Karten. Selbst nicht-entnehmbare Bauformen von SIM-Karten, beispielsweise MFF (Machine-to-Machine Form Factor) SIM-Karten, beanspruchen üblicherweise noch zu viel Platz zur Integration in derartige Kommunikationsgeräte. Hinzu kommt der Energieverbrauch klassischer SIM-Karten, welcher bei den vorliegenden Anwendungen, welche beispielsweise einen Betrieb mit einer einzigen AAA-Batteriezelle über einen Zeitraum von 5 Jahren vorsehen, zu berücksichtigen sein kann.

Klassische SIM-Karten in ihren gegenwärtig verfügbaren Ausprägungen erscheinen mithin im Kontext des mobilen Internets der Dinge aufgrund der hohen Anforderungen an Kosteneffizienz, Baugröße und Energieverbrauch nur beschränkt einsetzbar zu sein.

Die Druckschrift DE 10 2013 105 727 A1 offenbart ein Verfahren zum Deaktivieren einer Sicherheitsanlage unter Verwendung eines elektronisch auslesbaren Identifikationsdokumentes. Dabei kann eine elektronische Identifikation aus dem Identifikationsdokument ausgelesen und mit einer vorgespeicherten elektronischen Identifikation verglichen werden.

Die Druckschrift DE 195 27 715 A1 offenbart ein Verfahren zur Nutzeridentifikation und Nutzerauthentifikation bei Datenfunkverbindungen, insbesondere für das Mobilfunksystem Modacom. Dabei erfolgt eine Authentifikation einer Chipkarte gegenüber einem Endgerät unter Verwendung kryptographischer Schlüssel.

Die Druckschrift DE 10 2014 105 866 A1 offenbart ein Verfahren zum Versehen eines Identifikationsausweises einer Person mit einem kryptographischen Zertifikat. Dabei werden ein vorgespeichertes Personendatum und ein erzeugter kryptographischer Schlüssel an einen elektronischen Zertifizierungsserver übermittelt. Das kryptographische Zertifikat wird durch den elektronischen Zertifizierungsserver erzeugt und an den Identifikationsausweis übermittelt.

Die Druckschrift DE 10 2008 024 798 A1 offenbart ein Verfahren zur Over-The-Air Personalisierung von Chipkarten in der Telekommunikation. Dabei wird ein Teilnehmeridentifizierungsmodul vor der ersten Inbetriebnahme mit einem nicht-individuellen und vorläufigen Satz initialer Identifizierungs- und Authentisierungsparameter ausgerüstet, wobei nach der ersten Inbetriebnahme ein individueller und endgültiger Teilnehmerdatensatz auf dem Teilnehmeridentifizierungsmodul gespeichert wird.

### BESCHREIBUNG DER ERFINDUNG

Es ist daher eine Aufgabe der vorliegenden Erfindung, ein effizientes Konzept zum Identifizieren eines Teilnehmers in einem Kommunikationsnetzwerk zu schaffen.

Diese Aufgabe wird durch die Merkmale der unabhängigen Ansprüche gelöst. Vorteilhafte Ausführungsformen der Erfindung sind Gegenstand der Beschreibung, der Figuren sowie der abhängigen Ansprüche.

Die vorliegende Erfindung basiert auf der Erkenntnis, dass die obige Aufgabe durch ein optimiertes Teilnehmeridentifikationssystem zur Umsetzung der Grundfunktionalität einer SIM-Karte gelöst werden kann, wobei eine kostengünstige Integration mit der verbleibenden Hardware eines Kommunikationsgerätes, beispielsweise in Form eines System-on-Chip (SoC), erfolgen kann. Durch eine Trennung zwischen nicht-kritischen Funktionen in einem ersten Schaltkreismodul und kritischen Funktionen in einem zweiten Schaltkreismodul im Sinne der Datensicherheit wird folglich ein optimiertes Design ermöglicht, bei dem nur noch ein sehr geringer Anteil kritischer Funktionen auf sichere Weise implementiert werden sollte. Das erste Schaltkreismodul kann folglich geringere Anforderungen hinsichtlich der Datensicherheit aufweisen als das zweite Schaltkreismodul. Dadurch wird beispielsweise eine einfache Integration des ersten Schaltkreismoduls in ein drittes Schaltkreismodul des Kommunikationsgerätes ermöglicht, wobei das dritte Schaltkreismodul die Grundfunktionalität des Kommunikationsgerätes bereitstellen kann. Bei einer vollständigen Integration aller drei Module können erhöhte Anforderungen hinsichtlich der Datensicherheit lediglich für den Teil des zweiten Schaltkreismoduls von Bedeutung sein.

Die begrenzte Anzahl von kritischen Funktionen führt dabei zu einem verringerten Potenzial für Angriffe auf die Datensicherheit, ein allgemein geringeres Risiko für Fehler und eine einfachere und somit kostengünstigere Prüfung und Zertifizierung. Die Möglichkeit zur Integration in Form eines minimalen System-on-Chip (SoC) löst dabei zugleich die vorgenannten Herausforderungen im Kontext des mobilen Internets der Dinge, insbesondere des Energieverbrauchs, der Baugröße und der Kosteneffizienz bei hohen Stückzahlen.

Folglich kann ein modulares und tief integrierbares Teilnehmeridentifikationssystem (Subscriber Identification System, SIS) realisiert werden, welches eine Identifizierung des Teilnehmers ermöglicht. Ferner kann eine Authentifizierung des Teilnehmers erfolgen.

Gemäß einem ersten Aspekt betrifft die Erfindung ein Teilnehmeridentifikationssystem zum Identifizieren eines Teilnehmers in einem Kommunikationsnetzwerk, wobei dem Teilnehmer eine Teilnehmeridentitätskennung und ein kryptographischer Schlüssel zugeordnet sind. Das Teilnehmeridentifikationssystem umfasst ein erstes Schaltkreismodul, in welchem zumindest die Teilnehmeridentitätskennung gespeichert ist, wobei das erste Schaltkreismodul eine erste Kommunikationsschnittstelle aufweist, welche ausgebildet ist, ein Anfragesignal nach der Teilnehmeridentitätskennung zu empfangen, und, ansprechend auf den Empfang des Anfragesignals, die Teilnehmeridentitätskennung auszusenden. Das Teilnehmeridentifikationssystem umfasst ferner ein zweites Schaltkreismodul, in welchem zumindest der kryptographische Schlüssel gespeichert ist, wobei das zweite Schaltkreismodul eine zweite Kommunikationsschnittstelle aufweist, welche ausgebildet ist, einen Eingabeparameter zu empfangen, wobei das zweite Schaltkreismodul ausgebildet ist, den Eingabeparameter mit dem kryptographischen Schlüssel unter Verwendung eines Algorithmus zu verknüpfen, um einen Ausgabeparameter zu erhalten, und wobei die zweite Kommunikationsschnittstelle ausgebildet ist, den Ausgabeparameter auszusenden.

Der Teilnehmer kann beispielsweise unter Verwendung der Teilnehmeridentitätskennung identifiziert werden und unter Verwendung des Eingabeparameters und Ausgabeparameters authentifiziert werden.

Gemäß einer Ausführungsform umfasst das erste Schaltkreismodul einen ersten nicht-flüchtigen Speicher, wobei zumindest die Teilnehmeridentitätskennung in dem ersten nicht-flüchtigen Speicher gespeichert ist, und umfasst das zweite Schaltkreismodul einen zweiten nicht-flüchtigen Speicher, wobei zumindest der kryptographische Schlüssel in dem zweiten nicht-flüchtigen Speicher gespeichert ist. Dadurch wird der Vorteil erreicht, dass die Teilnehmeridentitätskennung und der kryptographische Schlüssel dauerhaft gespeichert werden können.

Der erste nicht-flüchtige Speicher und/oder der zweite nicht-flüchtige Speicher können jeweils durch einen löschbaren programmierbaren Nur-Lese-Speicher (Erasable Programmable Read-Only Memory, EPROM) gebildet sein.

Gemäß einer Ausführungsform umfasst das zweite Schaltkreismodul eine Logikschaltung, wobei die Logikschaltung ausgebildet ist, den Eingabeparameter mit dem kryptographischen Schlüssel unter Verwendung des Algorithmus zu verknüpfen. Dadurch wird der Vorteil erreicht, dass der Ausgabeparameter effizient auf der Basis des Eingabeparameters und des Algorithmus bestimmt werden kann.

Die Logikschaltung kann durch eine programmierbare logische Schaltung (Programmable Logic Device, PLD) gebildet sein. Die Logikschaltung kann ferner festverdrahtet sein.

Gemäß einer Ausführungsform bildet das zweite Schaltkreismodul ein Hardware-Sicherheitsmodul (engl. Hardware Security Module, HSM). Dadurch wird der Vorteil erreicht, dass das zweite Schaltkreismodul Funktionen und Eigenschaften eines Hardware-Sicherheitsmoduls nutzen kann, welche ein Ausspähen oder eine Manipulation des kryptographischen Schlüssels und/oder des Algorithmus erschweren.

Das zweite Schaltkreismodul kann den kryptographischen Schlüssel und/oder den Algorithmus sowohl gegen softwaretechnische als auch physikalische Angriffe sowie gegen Seitenkanalangriffe schützen. Das zweite Schaltkreismodul kann ausgebildet sein, Angriffe bzw. Seitenkanalangriffe zu detektieren, und ansprechend hierauf den kryptographischen Schlüssel und/oder den Algorithmus zu löschen. Das zweite Schaltkreismodul kann ferner leitende Schichten zur Schirmung aufweisen, um ein unerwünschtes Auslesen des kryptographischen Schlüssels und/oder des Algorithmus auf der Basis abgestrahlter elektromagnetischer Wellen zu verhindern. Das zweite Schaltkreismodul kann ferner ausgebildet sein, eingestrahltes Licht in einem vorbestimmten Wellenlängenbereich oder nicht-spezifizierte Betriebszustände des zweiten Schaltkreismoduls zu detektieren, und ansprechend hierauf den kryptographischen Schlüssel und/oder den Algorithmus zu löschen. Das zweite Schaltkreismodul kann ferner etablierte Ansätze zur Busverschlüsselung einsetzen. Das zweite Schaltkreismodul kann ferner einen sicheren Kryptoprozessor (engl. Secure Cryptoprocessor) umfassen oder einen sicheren Kryptoprozessor bilden.

Gemäß einer Ausführungsform umfasst das Teilnehmeridentifikationssystem ein Trusted Platform Module (TPM), wobei das Trusted Platform Module (TPM) das zweite Schaltkreismodul umfasst. Dadurch wird der Vorteil erreicht, dass das zweite Schaltkreismodul in das Trusted Platform Module (TPM) integriert werden kann.

Gemäß einer Ausführungsform ist in dem zweiten Schaltkreismodul ferner die Teilnehmeridentitätskennung gespeichert. Dadurch wird der Vorteil erreicht, dass eine Zuordnung der Teilnehmeridentitätskennung zu dem kryptographischen Schlüssel effizient gewährleistet werden kann.

Gemäß einer Ausführungsform ist die Teilnehmeridentitätskennung eine International Mobile Subscriber Identity (IMSI). Dadurch wird der Vorteil erreicht, dass eine standardisierte Form einer Teilnehmeridentitätskennung verwendet werden kann.

Gemäß einer Ausführungsform ist der Algorithmus ein A3/A8-Algorithmus, ein MILENAGE-Algorithmus oder ein TUAK-Algorithmus. Dadurch wird der Vorteil erreicht, dass standardisierte Authentifizierungsalgorithmen verwendet werden können.

Die A3-Komponente des A3/A8-Algorithmus kann der Authentifizierung dienen. Die A8-Komponente des A3/A8-Algorithmus kann der Schlüsselerzeugung zur Verschlüsselung der Kommunikation dienen. Beide Komponenten können gemeinsam ausgeführt werden, wobei bei jeder Authentifizierung ein neuer Schlüssel zur Verschlüsselung der Kommunikation bereitgestellt werden kann. Der Ausgabeparameter kann für beide Zwecke verwendet werden. Der MILENAGE-Algorithmus und der TUAK-Algorithmus können ebenso zur Authentifizierung und Schlüsselerzeugung eingesetzt werden. Der A3/A8-Algorithmus, der MILENAGE-Algorithmus und der TUAK-Algorithmus können gemäß der entsprechenden ETSI-Standards bzw. 3GPP-Standards implementiert werden.

Gemäß einer Ausführungsform ist der kryptographische Schlüssel in dem zweiten Schaltkreismodul nicht-auslesbar gespeichert. Dadurch wird der Vorteil erreicht, dass der kryptographische Schlüssel an das zweite Schaltkreismodul kryptographisch gebunden ist.

Gemäß einem zweiten Aspekt betrifft die Erfindung ein Kommunikationsgerät zum Kommunizieren mit einem Authentifizierungsserver über ein Kommunikationsnetzwerk. Das Kommunikationsgerät umfasst ein Teilnehmeridentifikationssystem gemäß dem ersten Aspekt der Erfindung. Das Kommunikationsgerät umfasst ferner ein drittes Schaltkreismodul mit einer dritten Kommunikationsschnittstelle zum Kommunizieren mit dem Teilnehmeridentifikationssystem und einer vierten Kommunikationsschnittstelle zum Kommunizieren mit dem Authentifizierungsserver über das Kommunikationsnetzwerk. Die dritte Kommunikationsschnittstelle ist ausgebildet, das Anfragesignal an das Teilnehmeridentifikationssystem auszusenden, und die Teilnehmeridentitätskennung von dem Teilnehmeridentifikationssystem zu empfangen. Die vierte Kommunikationsschnittstelle ist ausgebildet, die empfangene Teilnehmeridentitätskennung an den Authentifizierungsserver über das Kommunikationsnetzwerk auszusenden.

Das dritte Schaltkreismodul kann ferner einen Prozessor und weitere Schnittstellen des Kommunikationsgerätes beispielsweise zur Interaktion mit dem Teilnehmer umfassen.

Der Authentifizierungsserver kann Teil einer Authentifizierungszentrale (Authentication Center, AuC) des Kommunikationsnetzwerkes sein.

Gemäß einer Ausführungsform ist die vierte Kommunikationsschnittstelle ferner ausgebildet, den Eingabeparameter von dem Authentifizierungsserver über das Kommunikationsnetzwerk zu empfangen, wobei die dritte Kommunikationsschnittstelle ferner ausgebildet ist, den Eingabeparameter an das Teilnehmeridentifikationssystem auszusenden, und den Ausgabeparameter von dem Teilnehmeridentifikationssystem zu empfangen, und wobei die vierte Kommunikationsschnittstelle ferner ausgebildet ist, den Ausgabeparameter an den Authentifizierungsserver über das Kommunikationsnetzwerk auszusenden. Dadurch wird der Vorteil erreicht, dass eine effiziente Authentifizierung des Teilnehmers erfolgen kann.

Gemäß einer Ausführungsform umfasst das dritte Schaltkreismodul das erste Schaltkreismodul des Teilnehmeridentifikationssystems und/oder das zweite Schaltkreismodul des Teilnehmeridentifikationssystems. Dadurch wird der Vorteil erreicht, dass eine effiziente Implementierung erreicht werden kann.

Gemäß einer Ausführungsform ist das erste Schaltkreismodul in einer ersten integrierten Schaltung angeordnet. Dadurch wird der Vorteil erreicht, dass das erste Schaltkreismodul effizient implementiert werden kann.

Gemäß einer Ausführungsform ist das zweite Schaltkreismodul in einer zweiten integrierten Schaltung angeordnet. Dadurch wird der Vorteil erreicht, dass das zweite Schaltkreismodul effizient implementiert werden kann.

Gemäß einer Ausführungsform ist das dritte Schaltkreismodul in einer dritten integrierten Schaltung angeordnet. Dadurch wird der Vorteil erreicht, dass das dritte Schaltkreismodul effizient implementiert werden kann.

Gemäß einer Ausführungsform ist das erste Schaltkreismodul in einer ersten integrierten Schaltung angeordnet, wobei das zweite Schaltkreismodul in einer zweiten integrierten Schaltung angeordnet ist, und wobei das dritte Schaltkreismodul in einer dritten integrierten Schaltung angeordnet ist. Dadurch wird der Vorteil erreicht, dass die Schaltkreismodule jeweils einzeln effizient implementiert werden können.

Gemäß einer Ausführungsform sind das erste Schaltkreismodul, das zweite Schaltkreismodul und das dritte Schaltkreismodul in einer gemeinsamen integrierten Schaltung angeordnet. Dadurch wird der Vorteil erreicht, dass die Schaltkreismodule gemeinsam effizient implementiert werden können.

Gemäß einem dritten Aspekt betrifft die Erfindung ein Verfahren zum Identifizieren eines Teilnehmers in einem Kommunikationsnetzwerk unter Verwendung eines Teilnehmeridentifikationssystems. Dem Teilnehmer sind eine Teilnehmeridentitätskennung und ein kryptographischer Schlüssel zugeordnet. Das Teilnehmeridentifikationssystem umfasst ein erstes Schaltkreismodul mit einer ersten Kommunikationsschnittstelle und ein zweites Schaltkreismodul mit einer zweiten Kommunikationsschnittstelle, wobei in dem ersten Schaltkreismodul zumindest die Teilnehmeridentitätskennung gespeichert ist, und wobei in dem zweiten Schaltkreismodul zumindest der kryptographische Schlüssel gespeichert ist. Das Verfahren umfasst ein Empfangen eines Anfragesignals nach der Teilnehmeridentitätskennung durch die erste Kommunikationsschnittstelle, ansprechend auf den Empfang des Anfragesignals, ein Aussenden der Teilnehmeridentitätskennung durch die erste Kommunikationsschnittstelle, ein Empfangen eines Eingabeparameters durch die zweite Kommunikationsschnittstelle, ein Verknüpfen des Eingabeparameters mit dem kryptographischen Schlüssel unter Verwendung eines Algorithmus durch das zweite Schaltkreismodul, um einen Ausgabeparameter zu erhalten, und ein Aussenden des Ausgabeparameters durch die zweite Kommunikationsschnittstelle.

Das Verfahren kann durch das Teilnehmeridentifikationssystem ausgeführt werden. Weitere Merkmale des Verfahrens resultieren unmittelbar aus den Merkmalen oder der Funktionalität des Teilnehmeridentifikationssystems.

Gemäß einem vierten Aspekt betrifft die Erfindung ein Verfahren zum Kommunizieren mit einem Authentifizierungsserver über ein Kommunikationsnetzwerk unter Verwendung eines Kommunikationsgerätes. Das Kommunikationsgerät umfasst ein Teilnehmeridentifikationssystem gemäß dem ersten Aspekt der Erfindung und ein drittes Schaltkreismodul mit einer dritten Kommunikationsschnittstelle zum Kommunizieren mit dem Teilnehmeridentifikationssystem und einer vierten Kommunikationsschnittstelle zum Kommunizieren mit dem Authentifizierungsserver über das Kommunikationsnetzwerk. Das Verfahren umfasst ein Aussenden des Anfragesignals an das Teilnehmeridentifikationssystem durch die dritte Kommunikationsschnittstelle, ein Empfangen der Teilnehmeridentitätskennung von dem Teilnehmeridentifikationssystem durch die dritte Kommunikationsschnittstelle, und ein Aussenden der empfangenen Teilnehmeridentitätskennung an den Authentifizierungsserver über das Kommunikationsnetzwerk durch die vierte Kommunikationsschnittstelle.

Das Verfahren kann durch das Kommunikationsgerät ausgeführt werden. Weitere Merkmale des Verfahrens resultieren unmittelbar aus den Merkmalen oder der Funktionalität des Kommunikationsgerätes.

Gemäß einem fünften Aspekt betrifft die Erfindung ein Computerprogramm mit einem Programmcode zum Ausführen des Verfahrens gemäß dem dritten Aspekt der Erfindung oder des Verfahrens gemäß dem vierten Aspekt der Erfindung.

Das Teilnehmeridentifikationssystem und/oder das Kommunikationsgerät können programmtechnisch eingerichtet sein, um den Programmcode auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Figuren näher erläutert. Es zeigen:
Fig. 1 ein schematisches Diagramm eines Teilnehmeridentifikationssystems zum Identifizieren eines Teilnehmers in einem Kommunikationsnetzwerk;
Fig. 2 ein schematisches Diagramm eines Kommunikationsgeräts zum Kommunizieren mit einem Authentifizierungsserver über ein Kommunikationsnetzwerk;
Fig. 3 ein schematisches Diagramm eines Kommunikationsgeräts zum Kommunizieren mit einem Authentifizierungsserver über ein Kommunikationsnetzwerk;
Fig. 4 ein schematisches Diagramm eines Kommunikationsgeräts zum Kommunizieren mit einem Authentifizierungsserver über ein Kommunikationsnetzwerk;
Fig. 5 ein schematisches Diagramm eines Kommunikationsgeräts zum Kommunizieren mit einem Authentifizierungsserver über ein Kommunikationsnetzwerk;
Fig. 6 ein schematisches Diagramm eines Kommunikationsgeräts zum Kommunizieren mit einem Authentifizierungsserver über ein Kommunikationsnetzwerk;
Fig. 7 ein schematisches Diagramm eines Kommunikationsgeräts zum Kommunizieren mit einem Authentifizierungsserver über ein Kommunikationsnetzwerk;
Fig. 8 ein schematisches Diagramm eines Kommunikationsgeräts zum Kommunizieren mit einem Authentifizierungsserver über ein Kommunikationsnetzwerk;
Fig. 9 ein schematisches Diagramm eines Verfahrens zum Identifizieren eines Teilnehmers in einem Kommunikationsnetzwerk unter Verwendung eines Teilnehmeridentifikationssystems; und
Fig. 10 ein schematisches Diagramm eines Verfahrens zum Kommunizieren mit einem Authentifizierungsserver über ein Kommunikationsnetzwerk unter Verwendung eines Kommunikationsgerätes.

### DETAILIERTE BESCHREIBUNG DER FIGUREN

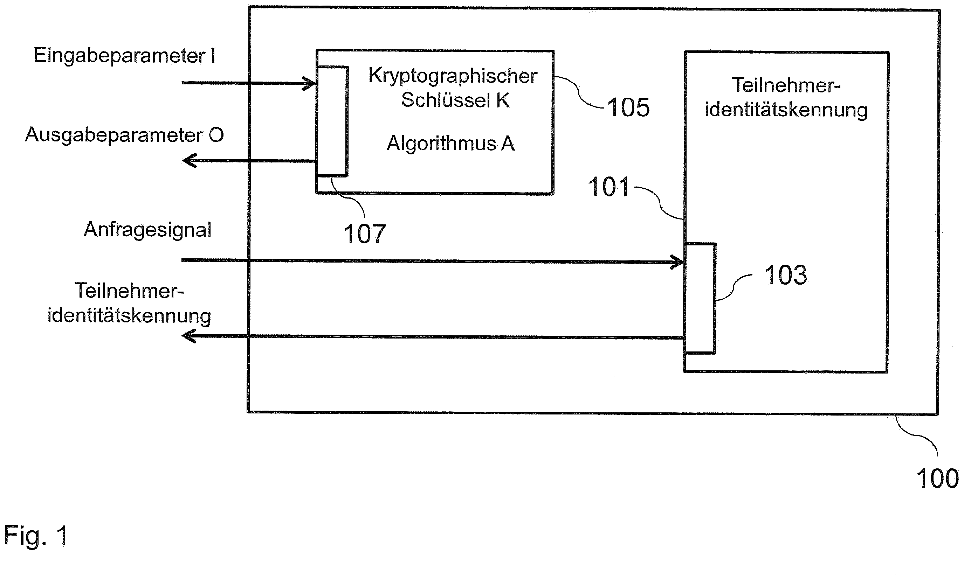

Fig. 1 zeigt ein schematisches Diagramm eines Teilnehmeridentifikationssystems 100 zum Identifizieren eines Teilnehmers in einem Kommunikationsnetzwerk. Dem Teilnehmer sind eine Teilnehmeridentitätskennung und ein kryptographischer Schlüssel K zugeordnet.

Das Teilnehmeridentifikationssystem 100 umfasst ein erstes Schaltkreismodul 101, in welchem zumindest die Teilnehmeridentitätskennung gespeichert ist, wobei das erste Schaltkreismodul 101 eine erste Kommunikationsschnittstelle 103 aufweist, welche ausgebildet ist, ein Anfragesignal nach der Teilnehmeridentitätskennung zu empfangen, und, ansprechend auf den Empfang des Anfragesignals, die Teilnehmeridentitätskennung auszusenden. Das Teilnehmeridentifikationssystem 100 umfasst ferner ein zweites Schaltkreismodul 105, in welchem zumindest der kryptographische Schlüssel K gespeichert ist, wobei das zweite Schaltkreismodul 105 eine zweite Kommunikationsschnittstelle 107 aufweist, welche ausgebildet ist, einen Eingabeparameter I zu empfangen, wobei das zweite Schaltkreismodul 105 ausgebildet ist, den Eingabeparameter I mit dem kryptographischen Schlüssel K unter Verwendung eines Algorithmus A zu verknüpfen, um einen Ausgabeparameter O zu erhalten, und wobei die zweite Kommunikationsschnittstelle 107 ausgebildet ist, den Ausgabeparameter O auszusenden.

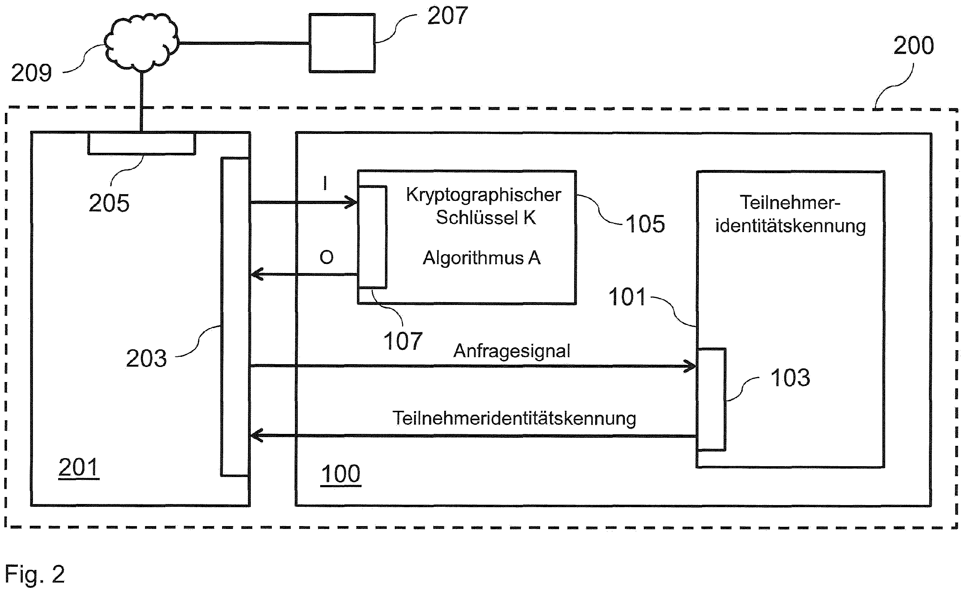

Fig. 2 zeigt ein schematisches Diagramm eines Kommunikationsgeräts 200 zum Kommunizieren mit einem Authentifizierungsserver 207 über ein Kommunikationsnetzwerk 209. Das Kommunikationsgerät umfasst ein Teilnehmeridentifikationssystem 100 und ein drittes Schaltkreismodul 201.

Das Teilnehmeridentifikationssystem 100 dient zum Identifizieren eines Teilnehmers in dem Kommunikationsnetzwerk 209. Dem Teilnehmer sind eine Teilnehmeridentitätskennung und ein kryptographischer Schlüssel K zugeordnet.

Das Teilnehmeridentifikationssystem 100 umfasst ein erstes Schaltkreismodul 101, in welchem zumindest die Teilnehmeridentitätskennung gespeichert ist, wobei das erste Schaltkreismodul 101 eine erste Kommunikationsschnittstelle 103 aufweist, welche ausgebildet ist, ein Anfragesignal nach der Teilnehmeridentitätskennung zu empfangen, und, ansprechend auf den Empfang des Anfragesignals, die Teilnehmeridentitätskennung auszusenden. Das Teilnehmeridentifikationssystem 100 umfasst ferner ein zweites Schaltkreismodul 105, in welchem zumindest der kryptographische Schlüssel K gespeichert ist, wobei das zweite Schaltkreismodul 105 eine zweite Kommunikationsschnittstelle 107 aufweist, welche ausgebildet ist, einen Eingabeparameter I zu empfangen, wobei das zweite Schaltkreismodul 105 ausgebildet ist, den Eingabeparameter I mit dem kryptographischen Schlüssel K unter Verwendung eines Algorithmus A zu verknüpfen, um einen Ausgabeparameter O zu erhalten, und wobei die zweite Kommunikationsschnittstelle 107 ausgebildet ist, den Ausgabeparameter O auszusenden.

Das dritte Schaltkreismodul 201 umfasst eine dritte Kommunikationsschnittstelle 203 zum Kommunizieren mit dem Teilnehmeridentifikationssystem 100 und eine vierte Kommunikationsschnittstelle 205 zum Kommunizieren mit dem Authentifizierungsserver 207 über das Kommunikationsnetzwerk 209. Die dritte Kommunikationsschnittstelle 203 ist ausgebildet, das Anfragesignal an das Teilnehmeridentifikationssystem 100 auszusenden, und die Teilnehmeridentitätskennung von dem Teilnehmeridentifikationssystem 100 zu empfangen. Die vierte Kommunikationsschnittstelle 205 ist ausgebildet, die empfangene Teilnehmeridentitätskennung an den Authentifizierungsserver 207 über das Kommunikationsnetzwerk 209 auszusenden. Mithin kann der Teilnehmer durch den Authentifizierungsserver 207 identifiziert werden.

Die vierte Kommunikationsschnittstelle 205 ist ferner ausgebildet, den Eingabeparameter I von dem Authentifizierungsserver 207 über das Kommunikationsnetzwerk 209 zu empfangen, wobei die dritte Kommunikationsschnittstelle 203 ferner ausgebildet ist, den Eingabeparameter I an das Teilnehmeridentifikationssystem 100 auszusenden, und den Ausgabeparameter O von dem Teilnehmeridentifikationssystem 100 zu empfangen, und wobei die vierte Kommunikationsschnittstelle 205 ferner ausgebildet ist, den Ausgabeparameter O an den Authentifizierungsserver 207 über das Kommunikationsnetzwerk 209 auszusenden. Mithin kann der Teilnehmer durch den Authentifizierungsserver 207, beispielsweise auf der Basis eines Challenge-Response-Ansatzes, authentifiziert werden.

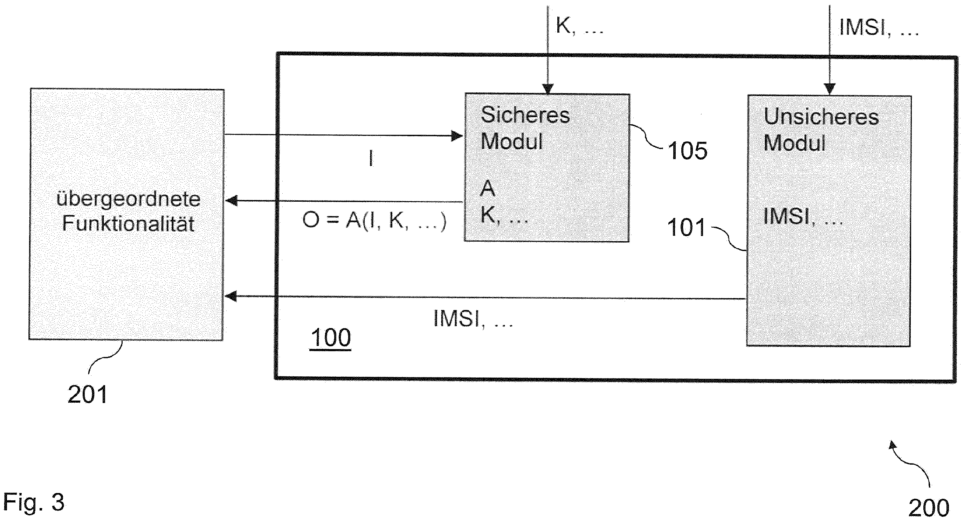

Fig. 3 zeigt ein schematisches Diagramm eines Kommunikationsgeräts 200 zum Kommunizieren mit einem Authentifizierungsserver über ein Kommunikationsnetzwerk. Das gezeigte Kommunikationsgerät 200 ist eine mögliche Ausführungsform des Kommunikationsgerätes 200 aus Fig. 2.

Das Kommunikationsgerät 200 umfasst ein Teilnehmeridentifikationssystem 100 mit einem ersten Schaltkreismodul 101 und einem zweiten Schaltkreismodul 105, sowie ein drittes Schaltkreismodul 201. Das erste Schaltkreismodul 101 kann als unsicheres Modul realisiert werden, das zweite Schaltkreismodul 105 kann als sicheres Modul realisiert werden, und das dritte Schaltkreismodul 201 kann eine übergeordnete Funktionalität des Kommunikationsgeräts 200 realisieren. Die Teilnehmeridentitätskennung ist eine International Mobile Subscriber Identity (IMSI).

Folglich kann ein zweiteiliges Teilnehmeridentifikationssystem (engl. Subscriber Identification System, SIS) 100 verwendet werden, mit einem ersten Schaltkreismodul 101 mit nur einem nicht-flüchtigen Speicher und einem zweiten Schaltkreismodul 105 mit einem nicht-flüchtigen Speicher und einer programmierten Logikschaltung.

Dabei enthält das zweite Schaltkreismodul 105 im einfachsten Fall nur einen kryptographischen Schlüssel K als Authentisierungsschlüssel und einen Algorithmus A. Die Ausführung des Algorithmus A kann von außen durch Übergabe eines Eingabeparameters I gestartet werden, woraufhin mit Hilfe des geheimen kryptographischen Schlüssels K ein Ausgabeparameter O erzeugt wird, d.h. O = A(I, K). Der Ausgabeparameter O wird dabei zurückgeliefert, ohne dass der kryptographische Schlüssel K oder der Algorithmus A nach außen sichtbar werden. Das zweite Schaltkreismodul 105 dient folglich allein zur Ausführung des Algorithmus A. Es enthält außerdem eine weitere Funktionalität zum Speichern des kryptographischen Schlüssels K.

Das erste Schaltkreismodul 101 umfasst optional weitere relevante Daten, im einfachsten Fall jedoch nur die Teilnehmeridentitätskennung bzw. IMSI des Teilnehmers. Die Daten des ersten Schaltkreismoduls 101 sind typischerweise unkritisch und können von außen gespeichert und ausgelesen werden.

Das Teilnehmeridentifikationssystem 100 wird einem Teilnehmerverhältnis zugeordnet bzw. personalisiert, indem eine Kombination von Teilnehmeridentitätskennung und kryptographischem Schlüssel K gespeichert werden. Der kryptographische Schlüssel K wird dabei in dem zweiten Schaltkreismodul 105 und die Teilnehmeridentitätskennung in dem ersten Schaltkreismodul 101 gespeichert.

Zum Betrieb des Kommunikationsgerätes 200 kann das dritte Schaltkreismodul 201 als übergeordnete Funktionalität auf die Schaltkreismodule 101, 105 zugreifen, und beispielsweise die Teilnehmeridentitätskennung aus dem ersten Schaltkreismodul 101 auslesen und eine Authentifizierung gegenüber dem Kommunikationsnetzwerk 209, beispielsweise einem Mobilfunknetzwerk, unter Verwendung des zweiten Schaltkreismoduls 105 durchführen. Zusammenfassend ergibt sich daraus die Grundfunktionalität einer klassischen SIM-Karte, welche aus Sicht des Kommunikationsnetzwerkes 209 nicht von dieser zu unterscheiden ist. Das Kommunikationsgerät 200 kann beispielsweise ein Endgerät im Kontext des Internets der Dinge sein.

Gemäß einer Ausführungsform wird das erste Schaltkreismodul 101 in das dritte Schaltkreismodul 201 als übergeordnete Funktionalität des Kommunikationsgerätes 200, beispielsweise in einen Speicher des Kommunikationsgeräts 200, logisch integriert, und das zweite Schaltkreismodul 105 in einem Prozessor, beispielsweise dem Hauptprozessor, des Kommunikationsgeräts 200 als System-on-Chip (SoC) implementiert. In dieser Form können die oben genannten Vorteile besonders vorteilhaft realisiert werden. Das Kommunikationsgerät 200 kann folglich als Ein-Chip-System mit einer gemeinsamen integrierten Schaltung für die Schaltkreismodule 101, 105, 201 realisiert werden.

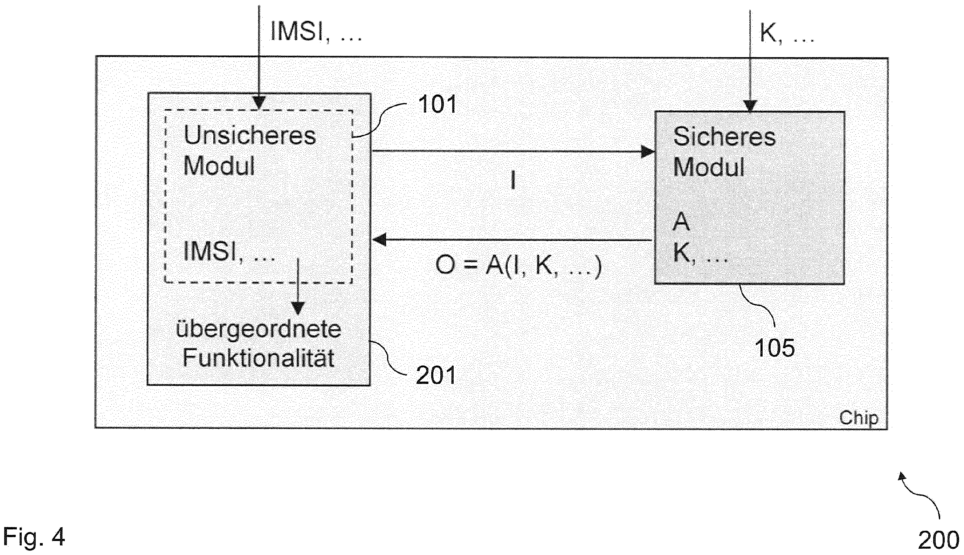

Fig. 4 zeigt ein schematisches Diagramm eines Kommunikationsgeräts 200 zum Kommunizieren mit einem Authentifizierungsserver über ein Kommunikationsnetzwerk. Das gezeigte Kommunikationsgerät 200 ist eine mögliche Ausführungsform des Kommunikationsgerätes 200 aus Fig. 2.

Das Kommunikationsgerät 200 umfasst ein Teilnehmeridentifikationssystem mit einem ersten Schaltkreismodul 101 und einem zweiten Schaltkreismodul 105, sowie ein drittes Schaltkreismodul 201. Das erste Schaltkreismodul 101 kann als unsicheres Modul realisiert werden, das zweite Schaltkreismodul 105 kann als sicheres Modul realisiert werden, und das dritte Schaltkreismodul 201 kann eine übergeordnete Funktionalität des Kommunikationsgeräts 200 realisieren. Die Teilnehmeridentitätskennung ist eine International Mobile Subscriber Identity (IMSI).

Das erste Schaltkreismodul 101 und das zweite Schaltkreismodul 105 sind auf derselben integrierten Schaltung (Chip) angeordnet. Das erste Schaltkreismodul 101 ist in das dritte Schaltkreismodul 201 als übergeordnete Funktionalität integriert.

Das erste Schaltkreismodul 101 ist folglich in das dritte Schaltkreismodul 201 als übergeordnete Funktionalität integriert und mit dem zweiten Schaltkreismodul 105 als System-on-Chip in einer gemeinsamen integrierten Schaltung enthalten. Diese Ausgestaltung kann besonders vorteilhaft im Sinne einer kosten-, platz- und energiesparenden Lösung sein.

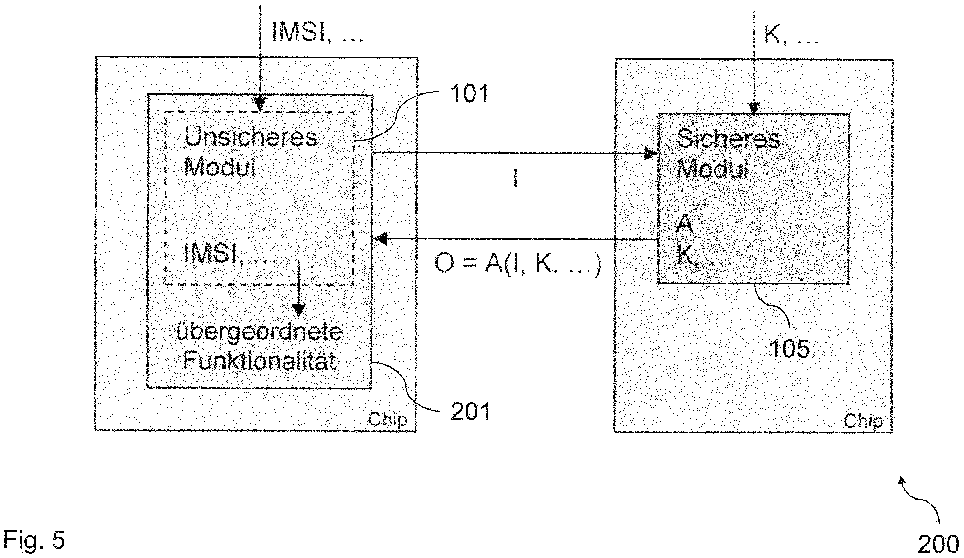

Fig. 5 zeigt ein schematisches Diagramm eines Kommunikationsgeräts 200 zum Kommunizieren mit einem Authentifizierungsserver über ein Kommunikationsnetzwerk. Das gezeigte Kommunikationsgerät 200 ist eine mögliche Ausführungsform des Kommunikationsgerätes 200 aus Fig. 2.

Das Kommunikationsgerät 200 umfasst ein Teilnehmeridentifikationssystem mit einem ersten Schaltkreismodul 101 und einem zweiten Schaltkreismodul 105, sowie ein drittes Schaltkreismodul 201. Das erste Schaltkreismodul 101 kann als unsicheres Modul realisiert werden, das zweite Schaltkreismodul 105 kann als sicheres Modul realisiert werden, und das dritte Schaltkreismodul 201 kann eine übergeordnete Funktionalität des Kommunikationsgeräts 200 realisieren. Die Teilnehmeridentitätskennung ist eine International Mobile Subscriber Identity (IMSI).

Das zweite Schaltkreismodul 105 ist auf einer separaten integrierten Schaltung (Chip) angeordnet. Das erste Schaltkreismodul 101 ist in das dritte Schaltkreismodul 201 als übergeordnete Funktionalität integriert.

Das erste Schaltkreismodul 101 ist folglich in das dritte Schaltkreismodul 201 als übergeordnete Funktionalität integriert und das zweite Schaltkreismodul 105 ist als separate integrierte Schaltung (Chip) ausgebildet. Der kryptographische Schlüssel K kann mithin in einer sicheren Umgebung geladen und das zweite Schaltkreismodul 105 anschließend in einer unsicheren Umgebung in das Kommunikationsgerät 200 eingefügt werden.

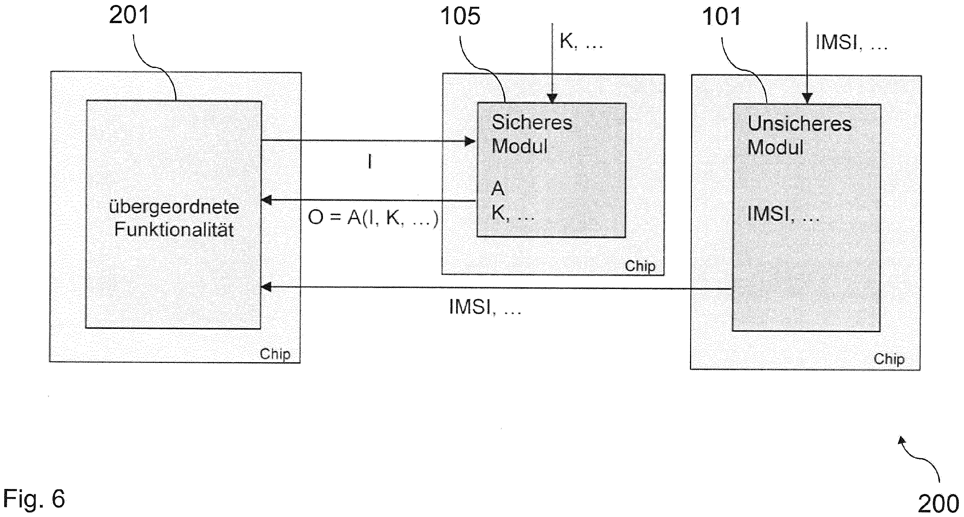

Fig. 6 zeigt ein schematisches Diagramm eines Kommunikationsgeräts 200 zum Kommunizieren mit einem Authentifizierungsserver über ein Kommunikationsnetzwerk. Das gezeigte Kommunikationsgerät 200 ist eine mögliche Ausführungsform des Kommunikationsgerätes 200 aus Fig. 2.

Das Kommunikationsgerät 200 umfasst ein Teilnehmeridentifikationssystem mit einem ersten Schaltkreismodul 101 und einem zweiten Schaltkreismodul 105, sowie ein drittes Schaltkreismodul 201. Das erste Schaltkreismodul 101 kann als unsicheres Modul realisiert werden, das zweite Schaltkreismodul 105 kann als sicheres Modul realisiert werden, und das dritte Schaltkreismodul 201 kann eine übergeordnete Funktionalität des Kommunikationsgeräts 200 realisieren. Die Teilnehmeridentitätskennung ist eine International Mobile Subscriber Identity (IMSI).

Das erste Schaltkreismodul 101 und das zweite Schaltkreismodul 105 sind auf separaten integrierten Schaltungen (Chips) angeordnet. Hierbei erfolgt keine Integration mit dem dritten Schaltkreismodul 201 als übergeordneter Funktionalität.

Folglich sind das erste Schaltkreismodul 101 und das zweite Schaltkreismodul 105 als separate integrierte Schaltungen (Chips) ausgebildet, bzw. in separaten integrierten Schaltungen (Chips) integriert.

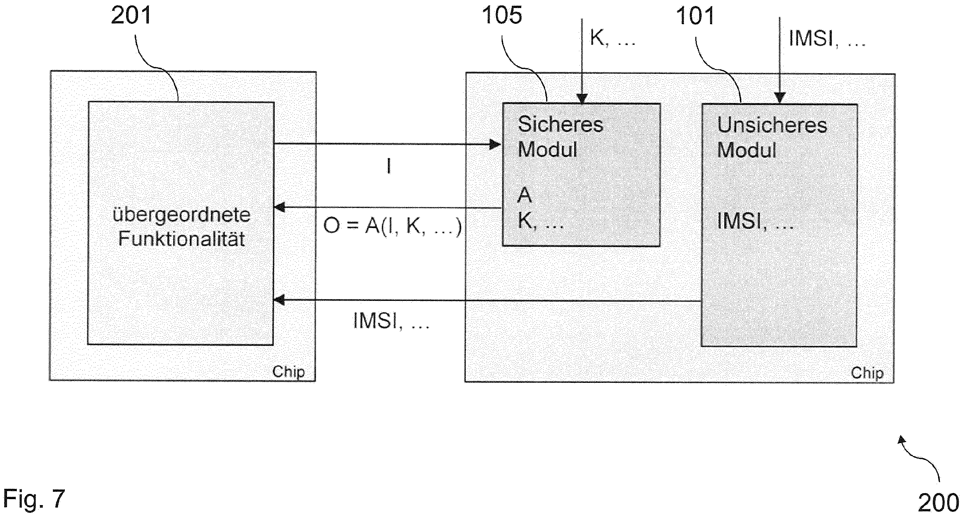

Fig. 7 zeigt ein schematisches Diagramm eines Kommunikationsgeräts 200 zum Kommunizieren mit einem Authentifizierungsserver über ein Kommunikationsnetzwerk. Das gezeigte Kommunikationsgerät 200 ist eine mögliche Ausführungsform des Kommunikationsgerätes 200 aus Fig. 2.

Das Kommunikationsgerät 200 umfasst ein Teilnehmeridentifikationssystem mit einem ersten Schaltkreismodul 101 und einem zweiten Schaltkreismodul 105, sowie ein drittes Schaltkreismodul 201. Das erste Schaltkreismodul 101 kann als unsicheres Modul realisiert werden, das zweite Schaltkreismodul 105 kann als sicheres Modul realisiert werden, und das dritte Schaltkreismodul 201 kann eine übergeordnete Funktionalität des Kommunikationsgeräts 200 realisieren. Die Teilnehmeridentitätskennung ist eine International Mobile Subscriber Identity (IMSI).

Das erste Schaltkreismodul 101 und das zweite Schaltkreismodul 105 sind auf einer gemeinsamen integrierten Schaltung (Chip) angeordnet. Hierbei erfolgt keine Integration mit dem dritten Schaltkreismodul 201 als übergeordneter Funktionalität.

Folglich sind das erste Schaltkreismodul 101 und das zweite Schaltkreismodul 105 in einer gemeinsamen integrierten Schaltung (Chip) enthalten. Somit kann eine integrierte Schaltung mit einem sicheren und einem unsicheren Bereich realisiert werden.

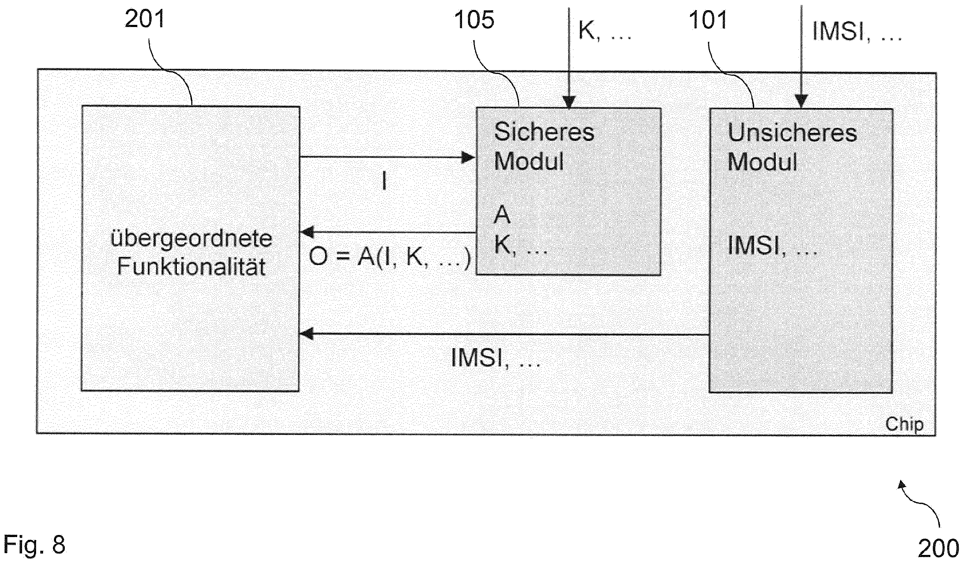

Fig. 8 zeigt ein schematisches Diagramm eines Kommunikationsgeräts 200 zum Kommunizieren mit einem Authentifizierungsserver über ein Kommunikationsnetzwerk. Das gezeigte Kommunikationsgerät 200 ist eine mögliche Ausführungsform des Kommunikationsgerätes 200 aus Fig. 2.

Das Kommunikationsgerät 200 umfasst ein Teilnehmeridentifikationssystem mit einem ersten Schaltkreismodul 101 und einem zweiten Schaltkreismodul 105, sowie ein drittes Schaltkreismodul 201. Das erste Schaltkreismodul 101 kann als unsicheres Modul realisiert werden, das zweite Schaltkreismodul 105 kann als sicheres Modul realisiert werden, und das dritte Schaltkreismodul 201 kann eine übergeordnete Funktionalität des Kommunikationsgeräts 200 realisieren. Die Teilnehmeridentitätskennung ist eine International Mobile Subscriber Identity (IMSI).

Das erste Schaltkreismodul 101, das zweite Schaltkreismodul 105 und das dritte Schaltkreismodul 201 als übergeordnete Funktionalität sind auf einer gemeinsamen integrierten Schaltung (Chip) angeordnet. Hierbei erfolgt keine Integration mit dem dritten Schaltkreismodul 201 als übergeordneter Funktionalität.

Folglich sind das erste Schaltkreismodul 101, das zweite Schaltkreismodul 105 und das dritte Schaltkreismodul 201 als übergeordnete Funktionalität in einer gemeinsamen integrierten Schaltung (Chip) enthalten. Hierbei erfolgt keine funktionale Integration.

Gemäß einer Ausführungsform umfasst das zweite Schaltkreismodul 105 zusätzlich die Teilnehmeridentitätskennung bzw. die IMSI. Entsprechende Funktionen erlauben die Ausführung des Algorithmus A, das Schreiben des kryptographischen Schlüssels K, sowie das Schreiben und Lesen der Teilnehmeridentitätskennung bzw. IMSI.

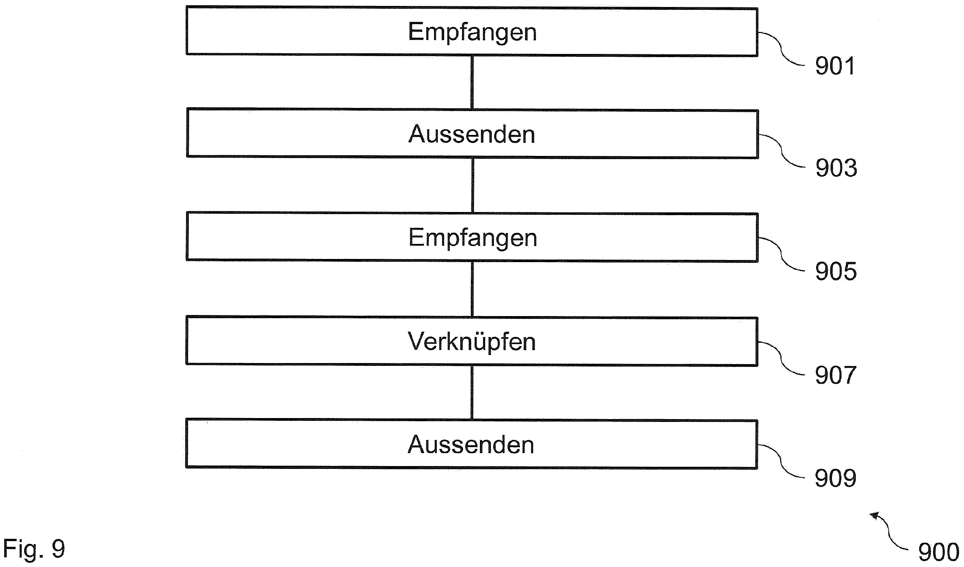

Fig. 9 zeigt ein schematisches Diagramm eines Verfahrens 900 zum Identifizieren eines Teilnehmers in einem Kommunikationsnetzwerk unter Verwendung eines Teilnehmeridentifikationssystems. Dem Teilnehmer sind eine Teilnehmeridentitätskennung und ein kryptographischer Schlüssel zugeordnet. Das Teilnehmeridentifikationssystem umfasst ein erstes Schaltkreismodul mit einer ersten Kommunikationsschnittstelle und ein zweites Schaltkreismodul mit einer zweiten Kommunikationsschnittstelle, wobei in dem ersten Schaltkreismodul zumindest die Teilnehmeridentitätskennung gespeichert ist, und wobei in dem zweiten Schaltkreismodul zumindest der kryptographische Schlüssel gespeichert ist.

Das Verfahren 900 umfasst ein Empfangen 901 eines Anfragesignals nach der Teilnehmeridentitätskennung durch die erste Kommunikationsschnittstelle, ansprechend auf den Empfang des Anfragesignals, ein Aussenden 903 der Teilnehmeridentitätskennung durch die erste Kommunikationsschnittstelle, ein Empfangen 905 eines Eingabeparameters durch die zweite Kommunikationsschnittstelle, ein Verknüpfen 907 des Eingabeparameters mit dem kryptographischen Schlüssel unter Verwendung eines Algorithmus durch das zweite Schaltkreismodul, um einen Ausgabeparameter zu erhalten, und ein Aussenden 909 des Ausgabeparameters durch die zweite Kommunikationsschnittstelle.

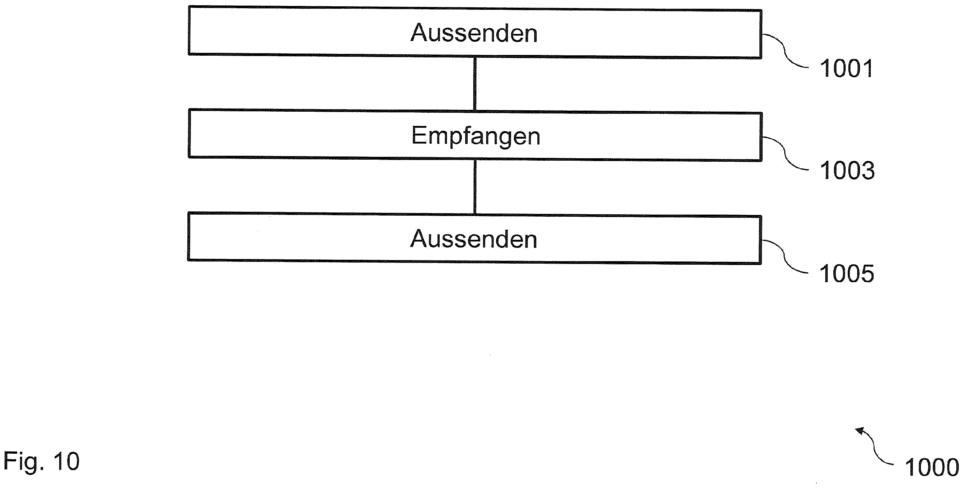

Fig. 10 zeigt ein schematisches Diagramm eines Verfahrens 1000 zum Kommunizieren mit einem Authentifizierungsserver über ein Kommunikationsnetzwerk unter Verwendung eines Kommunikationsgerätes. Das Kommunikationsgerät umfasst ein Teilnehmeridentifikationssystem gemäß Fig. 1 und ein drittes Schaltkreismodul mit einer dritten Kommunikationsschnittstelle zum Kommunizieren mit dem Teilnehmeridentifikationssystem und einer vierten Kommunikationsschnittstelle zum Kommunizieren mit dem Authentifizierungsserver über das Kommunikationsnetzwerk.

Das Verfahren 1000 umfasst ein Aussenden 1001 des Anfragesignals an das Teilnehmeridentifikationssystem durch die dritte Kommunikationsschnittstelle, ein Empfangen 1003 der Teilnehmeridentitätskennung von dem Teilnehmeridentifikationssystem durch die dritte Kommunikationsschnittstelle, und ein Aussenden 1005 der empfangenen Teilnehmeridentitätskennung an den Authentifizierungsserver über das Kommunikationsnetzwerk durch die vierte Kommunikationsschnittstelle.

Alle in Verbindung mit einzelnen Ausführungsformen der Erfindung gezeigten oder beschriebenen Merkmale können in beliebiger Kombination in dem erfindungsgemäßen Gegenstand vorgesehen sein, um gleichzeitig deren vorteilhafte Wirkungen zu realisieren.

### BEZUGSZEICHENLISTE

- 100: Teilnehmeridentifikationssystem
- 101: Erstes Schaltkreismodul
- 103: Erste Kommunikationsschnittstelle
- 105: Zweites Schaltkreismodul
- 107: Zweite Kommunikationsschnittstelle

- 200: Kommunikationsgerät
- 201: Drittes Schaltkreismodul
- 203: Dritte Kommunikationsschnittstelle
- 205: Vierte Kommunikationsschnittstelle
- 207: Authentifizierungsserver
- 209: Kommunikationsnetzwerk

- 900: Verfahren zum Identifizieren eines Teilnehmers in einem Kommunikationsnetzwerk
- 901: Empfangen eines Anfragesignals
- 903: Aussenden der Teilnehmeridentitätskennung
- 905: Empfangen eines Eingabeparameters
- 907: Verknüpfen des Eingabeparameters mit dem kryptographischen Schlüssel
- 909: Aussenden des Ausgabeparameters

- 1000: Verfahren zum Kommunizieren mit einem Authentifizierungsserver
- 1001: Aussenden des Anfragesignals
- 1003: Empfangen der Teilnehmeridentitätskennung
- 1005: Aussenden der empfangenen Teilnehmeridentitätskennung

## Patentansprüche

1. Teilnehmeridentifikationssystem (100) zum Identifizieren eines Teilnehmers in einem Kommunikationsnetzwerk (209), wobei dem Teilnehmer eine Teilnehmeridentitätskennung und ein kryptographischer Schlüssel (K) zugeordnet sind, mit:
einem ersten Schaltkreismodul (101), in welchem zumindest die Teilnehmeridentitätskennung gespeichert ist, wobei das erste Schaltkreismodul (101) eine erste Kommunikationsschnittstelle (103) aufweist, welche ausgebildet ist, ein Anfragesignal nach der Teilnehmeridentitätskennung zu empfangen, und, ansprechend auf den Empfang des Anfragesignals, die Teilnehmeridentitätskennung auszusenden; und
einem zweiten Schaltkreismodul (105), in welchem zumindest der kryptographische Schlüssel (K) gespeichert ist, wobei das zweite Schaltkreismodul (105) eine zweite Kommunikationsschnittstelle (107) aufweist, welche ausgebildet ist, einen Eingabeparameter (I) zu empfangen, wobei das zweite Schaltkreismodul (105) ausgebildet ist, den Eingabeparameter (I) mit dem kryptographischen Schlüssel (K) unter Verwendung eines Algorithmus (A) zu verknüpfen, um einen Ausgabeparameter (O) zu erhalten, und wobei die zweite Kommunikationsschnittstelle (107) ausgebildet ist, den Ausgabeparameter (O) auszusenden;
wobei das erste Schaltkreismodul (101) und das zweite Schaltkreismodul (105) in einer gemeinsamen integrierten Schaltung angeordnet sind.

2. Teilnehmeridentifikationssystem (100) nach Anspruch 1, wobei das erste Schaltkreismodul (101) einen ersten nicht-flüchtigen Speicher umfasst, wobei zumindest die Teilnehmeridentitätskennung in dem ersten nicht-flüchtigen Speicher gespeichert ist, und wobei das zweite Schaltkreismodul (105) einen zweiten nicht-flüchtigen Speicher umfasst, wobei zumindest der kryptographische Schlüssel (K) in dem zweiten nicht-flüchtigen Speicher gespeichert ist.

3. Teilnehmeridentifikationssystem (100) nach einem der vorstehenden Ansprüche, wobei das zweite Schaltkreismodul (105) eine Logikschaltung umfasst, wobei die Logikschaltung ausgebildet ist, den Eingabeparameter (I) mit dem kryptographischen Schlüssel (K) unter Verwendung des Algorithmus (A) zu verknüpfen.

4. Teilnehmeridentifikationssystem (100) nach einem der vorstehenden Ansprüche, wobei das zweite Schaltkreismodul (105) ein Hardware-Sicherheitsmodul bildet.

5. Teilnehmeridentifikationssystem (100) nach einem der vorstehenden Ansprüche, wobei die Teilnehmeridentitätskennung eine International Mobile Subscriber Identity (IMSI) ist.

6. Teilnehmeridentifikationssystem (100) nach einem der vorstehenden Ansprüche, wobei der Algorithmus (A) ein A3/A8-Algorithmus, ein MILENAGE-Algorithmus oder ein TUAK-Algorithmus ist.

7. Teilnehmeridentifikationssystem (100) nach einem der vorstehenden Ansprüche, wobei der kryptographische Schlüssel (K) in dem zweiten Schaltkreismodul (105) nicht-auslesbar gespeichert ist.

8. Kommunikationsgerät (200) zum Kommunizieren mit einem Authentifizierungsserver (207) über ein Kommunikationsnetzwerk (209), mit:
einem Teilnehmeridentifikationssystem (100) nach einem der Ansprüche 1 bis 7; und
einem dritten Schaltkreismodul (201) mit einer dritten Kommunikationsschnittstelle (203) zum Kommunizieren mit dem Teilnehmeridentifikationssystem (100) und einer vierten Kommunikationsschnittstelle (205) zum Kommunizieren mit dem Authentifizierungsserver (207) über das Kommunikationsnetzwerk (209);
wobei die dritte Kommunikationsschnittstelle (203) ausgebildet ist, das Anfragesignal an das Teilnehmeridentifikationssystem (100) auszusenden, und die Teilnehmeridentitätskennung von dem Teilnehmeridentifikationssystem (100) zu empfangen; und
wobei die vierte Kommunikationsschnittstelle (205) ausgebildet ist, die empfangene Teilnehmeridentitätskennung an den Authentifizierungsserver (207) über das Kommunikationsnetzwerk (209) auszusenden;
wobei das erste Schaltkreismodul (101), das zweite Schaltkreismodul (105) und das dritte Schaltkreismodul (201) in einer gemeinsamen integrierten Schaltung angeordnet sind.

9. Kommunikationsgerät (200) nach Anspruch 8, wobei die vierte Kommunikationsschnittstelle (205) ferner ausgebildet ist, den Eingabeparameter (I) von dem Authentifizierungsserver (207) über das Kommunikationsnetzwerk (209) zu empfangen, wobei die dritte Kommunikationsschnittstelle (203) ferner ausgebildet ist, den Eingabeparameter (I) an das Teilnehmeridentifikationssystem (100) auszusenden, und den Ausgabeparameter (O) von dem Teilnehmeridentifikationssystem (100) zu empfangen, und wobei die vierte Kommunikationsschnittstelle (205) ferner ausgebildet ist, den Ausgabeparameter (O) an den Authentifizierungsserver (207) über das Kommunikationsnetzwerk (209) auszusenden.

10. Kommunikationsgerät (200) nach einem der Ansprüche 8 oder 9, wobei das dritte Schaltkreismodul (201) das erste Schaltkreismodul (101) des Teilnehmeridentifikationssystems (100) und/oder das zweite Schaltkreismodul (105) des Teilnehmeridentifikationssystems (100) umfasst.

11. Verfahren (900) zum Identifizieren eines Teilnehmers in einem Kommunikationsnetzwerk (209) unter Verwendung eines Teilnehmeridentifikationssystems (100), wobei dem Teilnehmer eine Teilnehmeridentitätskennung und ein kryptographischer Schlüssel (K) zugeordnet sind, wobei das Teilnehmeridentifikationssystem (100) ein erstes Schaltkreismodul (101) mit einer ersten Kommunikationsschnittstelle (103) und ein zweites Schaltkreismodul (105) mit einer zweiten Kommunikationsschnittstelle (107) umfasst, wobei in dem ersten Schaltkreismodul (101) zumindest die Teilnehmeridentitätskennung gespeichert ist, wobei in dem zweiten Schaltkreismodul (105) zumindest der kryptographische Schlüssel (K) gespeichert ist, wobei das erste Schaltkreismodul (101) und das zweite Schaltkreismodul (105) in einer gemeinsamen integrierten Schaltung angeordnet sind, mit:
Empfangen (901) eines Anfragesignals nach der Teilnehmeridentitätskennung durch die erste Kommunikationsschnittstelle (103);
ansprechend auf den Empfang des Anfragesignals, Aussenden (903) der Teilnehmeridentitätskennung durch die erste Kommunikationsschnittstelle (103);
Empfangen (905) eines Eingabeparameters (I) durch die zweite Kommunikationsschnittstelle (107);
Verknüpfen (907) des Eingabeparameters (I) mit dem kryptographischen Schlüssel (K) unter Verwendung eines Algorithmus (A) durch das zweite Schaltkreismodul (105), um einen Ausgabeparameter (O) zu erhalten; und
Aussenden (909) des Ausgabeparameters (O) durch die zweite Kommunikationsschnittstelle (107).

12. Verfahren (1000) zum Kommunizieren mit einem Authentifizierungsserver (207) über ein Kommunikationsnetzwerk (209) unter Verwendung eines Kommunikationsgerätes (200), wobei das Kommunikationsgerät (200) ein Teilnehmeridentifikationssystem (100) nach einem der Ansprüche 1 bis 7 und ein drittes Schaltkreismodul (201) mit einer dritten Kommunikationsschnittstelle (203) zum Kommunizieren mit dem Teilnehmeridentifikationssystem (100) und einer vierten Kommunikationsschnittstelle (205) zum Kommunizieren mit dem Authentifizierungsserver (207) über das Kommunikationsnetzwerk (209) umfasst, wobei das erste Schaltkreismodul (101), das zweite Schaltkreismodul (105) und das dritte Schaltkreismodul (201) in einer gemeinsamen integrierten Schaltung angeordnet sind, mit:
Aussenden (1001) des Anfragesignals an das Teilnehmeridentifikationssystem (100) durch die dritte Kommunikationsschnittstelle (203);
Empfangen (1003) der Teilnehmeridentitätskennung von dem Teilnehmeridentifikationssystem (100) durch die dritte Kommunikationsschnittstelle (203); und
Aussenden (1005) der empfangenen Teilnehmeridentitätskennung an den Authentifizierungsserver (207) über das Kommunikationsnetzwerk (209) durch die vierte Kommunikationsschnittstelle (205).

13. Computerprogramm mit einem Programmcode zum Ausführen des Verfahrens (900) nach Anspruch 11 oder des Verfahrens (1000) nach Anspruch 12.

## Claims

1. A subscriber identification system (100) for identifying a subscriber within a communication network (209), wherein a subscriber identity identifier and a cryptographic key (K) are associated with the subscriber, with:
a first circuit module (101) in which at least the subscriber identity identifier is stored, wherein the first circuit module (101) has a first communication interface (103) that is designed to receive a request signal for the subscriber identity identifier and, in response to receiving the request signal, to transmit the subscriber identity identifier; and
a second circuit module (105), in which at least the cryptographic key (K) is stored, wherein the second circuit module (105) has a second communication interface (107) that is designed to receive an input parameter (I), wherein the second circuit module (105) is designed to combine the input parameter (I) with the cryptographic key (K) using an algorithm (A) in order to obtain an output parameter (O), and wherein the second communication interface (107) is designed to transmit the output parameter (O);
wherein the first circuit module (101) and the second circuit module (105) are arranged in a common integrated circuit.

2. The subscriber identification system (100) according to Claim 1, wherein the first circuit module (101) comprises a first non-volatile memory, wherein at least the subscriber identity identifier is stored in the first non-volatile memory, and wherein the second circuit module (105) comprises a second non-volatile memory, wherein at least the cryptographic key (K) is stored in the second non-volatile memory.

3. The subscriber identification system (100) according to one of the preceding claims, wherein the second circuit module (105) comprises a logic circuit, wherein the logic circuit is designed to combine the input parameter (I) with the cryptographic key (K), using the algorithm (A).

4. The subscriber identification system (100) according to one of the preceding claims, wherein the second circuit module (105) forms a hardware security module.

5. The subscriber identification system (100) according to one of the preceding claims, wherein the subscriber identity identifier is an International Mobile Subscriber Identity (IMSI).

6. The subscriber identification system (100) according to one of the preceding claims, wherein the algorithm (A) is an A3/A8 algorithm, a MILENAGE algorithm or a TUAK algorithm.

7. The subscriber identification system (100) according to one of the preceding claims, wherein the cryptographic key (K) is stored in the second circuit module (105) in a non-readable manner.

8. A communication device (200) for communicating with an authentication server (207) via a communication network (209), with:
a subscriber identification system (100) according to one of Claims 1 to 7; and
a third circuit module (201) with a third communication interface (203) for communicating with the subscriber identification system (100) and a fourth communication interface (205) for communicating with the authentication server (207) via the communication network (209);
wherein the third communication interface (203) is designed to transmit the request signal to the subscriber identification system (100) and receive the subscriber identity identifier from the subscriber identification system (100); and
wherein the fourth communication interface (205) is designed to transmit the received subscriber identity identifier to the authentication server (207) via the communication network (209);
wherein the first circuit module (101), the second circuit module (105) and the third circuit module (201) are arranged in a common integrated circuit.

9. The communication device (200) according to Claim 8, wherein the fourth communication interface (205) is further designed to receive the input parameter (I) from the authentication server (207) via the communication network (209), wherein the third communication interface (203) is further designed to transmit the input parameter (I) to the subscriber identification system (100) and to receive the output parameter (O) from the subscriber identification system (100), and wherein the fourth communication interface (205) is further designed to transmit the output parameter (O) to the authentication server (207) via the communication network (209).

10. A communication device (200) according to one of Claims 8 or 9, wherein the third circuit module (201) comprises the first circuit module (101) of the subscriber identification system (100) and/or the second circuit module (105) of the subscriber identification system (100).

11. A method (900) for identifying a subscriber within a communication network (209) using a subscriber identification system (100), wherein a subscriber identity identifier and a cryptographic key (K) are associated with the subscriber, wherein the subscriber identification system (100) comprises a first circuit module (101) with a first communication interface (103) and a second circuit module (105) with a second communication interface (107), wherein at least the subscriber identity identifier is stored in the first circuit module (101), wherein at least the cryptographic key (K) is stored in the second circuit module (105), wherein the first circuit module (101) and the second circuit module (105) are arranged in a common integrated circuit, with:
receiving (901) a request signal for the subscriber identity identifier via the first communication interface (103);
in response to the receipt of the request signal, transmitting (903) the subscriber identity identifier via the first communication interface (103);
receiving (905) an input parameter (I) via the second communication interface (107);
combining (907) the input parameter (I) with the cryptographic key (K) using an algorithm (A) via the second circuit module (105), in order to obtain an output parameter (O); and
transmitting (909) the output parameter (O) via the second communication interface (107).

12. A method (1000) for communicating with an authentication server (207) via a communication network (209) using a communication device (200), wherein the communication device (200) comprises a subscriber identification system (100) according to one of Claims 1 to 7 and a third circuit module (201) with a third communication interface (203) for communicating with the subscriber identification system (100) and a fourth communication interface (205) for communicating with the authentication server (207) via the communication network (209), wherein the first circuit module (101), the second circuit module (105) and the third circuit module (201) are arranged in a common integrated circuit, with:
transmitting (1001) the request signal to the subscriber identification system (100) via the third communication interface (203);
receiving (1003) the subscriber identity identifier from the subscriber identification system (100) via the third communication interface (203); and
transmitting (1005) the received subscriber identity identifier to the authentication server (207) via the communication network (209) through the fourth communication interface (205).

13. A computer program with a program code for executing the method (900) according to Claim 11 or the method (1000) according to Claim 12.

## Revendications

1. Système d'identification de participants (100) destiné à identifier un participant dans un réseau de communication (209), un identifiant de participant et une clé cryptographique (K) étant associés au participant, ledit système comportant
un premier module de circuit (101) destiné à stocker au moins l'identifiant de participant, le premier module de circuit (101) présentant une première interface de communication (103) conçue de manière à recevoir un signal demandant l'identifiant de participant et à envoyer l'identifiant de participant en réponse à la réception du signal de demande ; et
un deuxième module de circuit (105) destiné à stocker au moins la clé cryptographique (K), le deuxième module de circuit (105) présentant une deuxième interface de communication (107) conçue de manière à recevoir un paramètre de saisie (I), le deuxième module de circuit (105) étant conçu de manière à combiner le paramètre de saisie (I) avec la clé cryptographique (K) au moyen d'un algorithme (A) afin de recevoir un paramètre de sortie (O), et la deuxième interface de communication (107) étant conçue de manière à émettre le paramètre de sortie (O);
sachant que le premier module de circuit (101) et le deuxième module de circuit (105) sont disposés dans un circuit intégré commun.

2. Système d'identification de participants (100) selon la revendication 1, le premier module de circuit (101) comprenant une première mémoire non volatile, au moins l'identifiant de participant étant stocké dans la première mémoire non volatile et le deuxième module de circuit (105) comprenant une deuxième mémoire non volatile, au moins la clé cryptographique (K) étant stockée dans la deuxième mémoire non volatile.

3. Système d'identification de participants (100) selon l'une des revendications précédentes, le deuxième module de circuit (105) comprenant un circuit logique, ledit circuit logique étant conçu de manière à combiner le paramètre de saisie (I) avec la clé cryptographique (K) au moyen de l'algorithme (A).

4. Système d'identification de participants (100) selon l'une des revendications précédentes, le deuxième module de circuit (105) constituant un module matériel de sécurité.

5. Système d'identification de participants (100) selon l'une des revendications précédentes, l'identifiant de participant étant un identificateur d'abonné mobile international (International Mobile Subscriber Identity, IMSI).

6. Système d'identification de participants (100) selon l'une des revendications précédentes, l'algorithme (A) étant un algorithme A3/A8, un algorithme MILENAGE ou un algorithme TUAK.

7. Système d'identification de participants (100) selon l'une des revendications précédentes, la clé cryptographique (K) étant stockée sans être lisible dans le deuxième module de circuit (105).

8. Appareil de communication (200) pour communiquer avec un serveur d'authentification (207) via un réseau de communication (209), comportant
un système d'identification de participants (100) selon l'une des revendications 1 à 7 ; et
un troisième module de circuit (201) présentant une troisième interface de communication (203) pour communiquer avec le système d'identification de participants (100) et une quatrième interface de communication (205) pour communiquer avec le serveur d'authentification (207) via le réseau de communication (209) ;
la troisième interface de communication (203) étant conçue de manière à envoyer le signal de demande au système d'identification de participants (100) et à recevoir l'identifiant de participant du système d'identification de participants (100) ; et
la quatrième interface de communication (205) étant conçue de manière à envoyer l'identifiant de participant reçu au serveur d'authentification (207) via le réseau de communication (209) ;
sachant que le premier module de circuit (101), le deuxième module de circuit (105) et le troisième module de circuit (201) sont disposés dans un circuit intégré commun.

9. Appareil de communication (200) selon la revendication 8, la quatrième interface de communication (205) étant en plus conçue de manière à recevoir le paramètre de saisie (I) du serveur d'authentification (207) sur le réseau de communication (209), la troisième interface de communication (203) étant en plus conçue de manière à envoyer le paramètre de saisie (I) au système d'identification de participants (100) et à recevoir le paramètre de sortie (O) du système d'identification de participants (100), et la quatrième interface de communication (205) étant en plus conçue de manière à envoyer le paramètre de sortie (O) au serveur d'authentification (207) via le réseau de communication (209).

10. Appareil de communication (200) selon l'une des revendications 8 ou 9, le troisième module de circuit (201) comprenant le premier module de circuit (101) du système d'identification de participants (100) et/ou le deuxième module de circuit (105) du système d'identification de participants (100).

11. Procédé (900) d'identification d'un participant dans un réseau de communication (209) au moyen d'un système d'identification de participants (100), un identifiant de participant et une clé cryptographique (K) étant associés au participant, le système d'identification de participants (100) comprenant un premier module de circuit (101) comportant une première interface de communication (103) et un deuxième module de circuit (105) comportant une deuxième interface de communication (107), au moins l'identifiant de participant étant stocké dans le premier module de circuit (101), au moins la clé cryptographique (K) étant stockée dans le deuxième module de circuit (105), le premier module de circuit (101) et le deuxième module de circuit (105) étant disposés dans un circuit intégré commun, ledit procédé comportant les étapes suivantes :
la réception (901) d'un signal demandant l'identifiant de participant par la première interface de communication (103) ;
en réponse à la réception du signal de demande, l'envoi (903) de l'identifiant de participant par la première interface de communication (103) ;
la réception (905) d'un paramètre de saisie (I) par la deuxième interface de communication (107) ;
la combinaison (907) du paramètre de saisie (I) avec la clé cryptographique (K) au moyen d'un algorithme (A) par le deuxième module de circuit (105), afin de recevoir un paramètre de sortie (O) ; et
l'envoi (909) du paramètre de sortie (O) par la deuxième interface de communication (107).

12. Procédé (1000) de communication avec un serveur d'authentification (207) sur un réseau de communication (209) au moyen d'un appareil de communication (200), l'appareil de communication (200) comprenant un système d'identification de participants (100) selon l'une des revendications 1 à 7 et un troisième module de circuit (201) avec une troisième interface de communication (205) pour communiquer avec le système d'identification de participants (100) et une quatrième interface de communication (205) pour communiquer avec le serveur d'authentification (207) via le réseau de communication (209), le premier module de circuit (101), le deuxième module de circuit (105) et le troisième module de circuit (201) étant disposés dans un circuit intégré commun, ledit procédé comportant les étapes suivantes :
l'envoi (1001) du signal de demande au système d'identification de participants (100) par la troisième interface de communication (203) ;
la réception (1003) de l'identifiant de participant du système d'identification de participants (100) par la troisième interface de communication (203) ; et
l'envoi (1005) de l'identifiant de participant reçu au serveur d'authentification (207) par le réseau de communication (209) par la quatrième interface de communication (205).

13. Programme informatique avec un code de programmation pour réaliser le procédé (900) selon la revendication 11 ou le procédé (1000) selon la revendication 12.
